(19) Europäisches Patentamt
European Patent Office
Office européen des brevets

(11) EP 3 299 334 A1

(12) EUROPEAN PATENT APPLICATION

(43) Date of publication:
**28.03.2018 Bulletin 2018/13**

(51) Int Cl.:
***C01B** / (2006.01)*

(21) Application number: **16190855.3**

(22) Date of filing: **27.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ETH Zurich**
**8092 Zurich (CH)**

(72) Inventors:
- **Kovalenko, Maksym**
  **8006 Zürich (CH)**
- **Stadie, Nicholas**
  **8032 Zürich (CH)**
- **Billeter, Emanuel**
  **8051 Zürich (CH)**

(54) **BORON-DOPED GRAPHITIC CARBON**

(57) The present invention relates to methods of manufacturing boron-doped graphitic carbon, $BC_x$, particularly in the form of a bulk material, to bulk materials obtained by said method and to the use of such materials. The inventive manufacturing takes place at temperatures between 600-1200 °C, pressures above 2 bar, for a period of time between 0.1 h and 7 days and uses boron (III) halogenides and C1-C24 hydrocarbons as the starting materials.

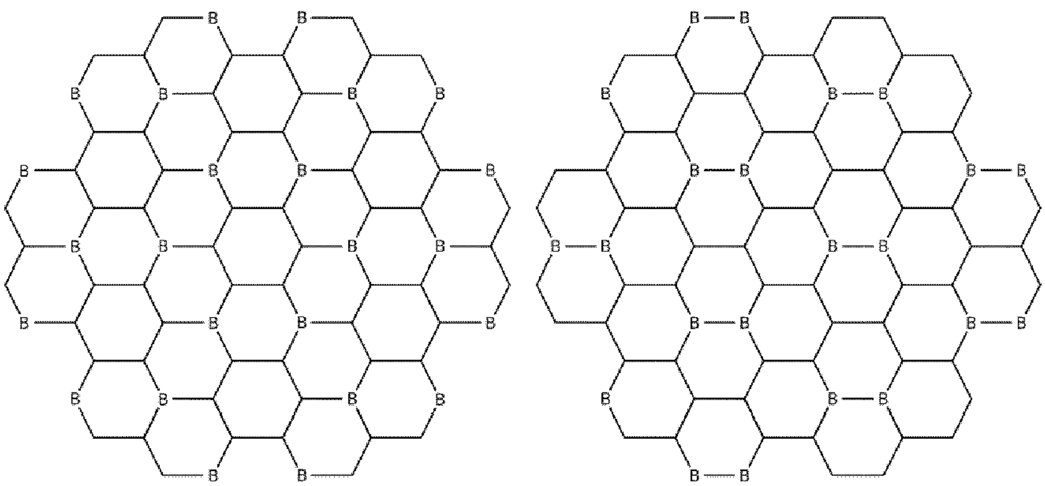

Fig. 2

EP 3 299 334 A1

## Description

The present invention relates to methods of manufacturing boron-doped graphitic carbon, BCx, particularly in the form of a bulk material, to bulk materials obtained by said method and to the use of such materials.

Graphitic compounds containing tunable concentrations of various heteroatom dopants have been actively investigated in an effort to optimize the physical and electrochemical properties of graphite. In particular, substitutional doping of boron (B) into the graphite structure (C) is seen as a simple method to introduce electron deficiency. The phase diagram of boron-carbon (B-C) is shown in Figure 1. Graphitic materials containing up to 2.5 at% B can be readily achieved by heating graphite together with a boron precursor at high temperatures (up to 2500 °C), yielding bulk samples of $BC_x$ with $x \geq 39$. The region of high carbon content (<50 at% boron) at near ambient temperature (25 °C) is dominated by the co-existence of graphite and boron carbide ($\sim B_4C$) which phase separate at equilibrium. However, it is possible to obtain a range of meta-stable compounds consisting of B substituted in graphitic carbon at temperatures below ~1000 °C up to at least x = 3 (though the precise compositional limit of this solid solution is not known).

There is currently no commercial route to bulk $BC_x$ ($39 > x \geq 3$), specifically $BC_3$. The known strategies to obtain $BC_x$ materials with >2.5 at% boron may be summarized as follows:

**a.** chemical vapour deposition ("CVD")
**b.** organic precursor decomposition ("tiling")

In approach **a,** one or more boron/carbon precursors are selected, vaporized, and mixed in desired stoichiometric ratio under continuous flow into a hot reaction zone containing a substrate for thin-film deposition. CVD takes place in an open reaction area, allowing reaction products and unreacted precursors to leave the reaction area. These CVD methods are performed under reduced pressure (< 1 bar). CVD may be considered a one-step reaction, but there are great disadvantages of this approach both in the high cost of apparatus (including flow controllers, sensors, and a vacuum manifold that must be resistant to the highly corrosive precursors and their by-products) and the thin-film nature of the product (yield is low, sample size is small, and the sample must be freed from the substrate). CVD methods yield thin-film materials only, not bulk materials. Thin-films can be separated from their substrate but their properties are altered in doing so. Two examples of CVD routes to $BC_x$ are:

$$\frac{x}{6}\, C_6H_6 + BCl_3 \rightarrow BC_x + 3\, HCl + \left(\frac{x-3}{2}\right) H_2$$

$$\frac{x}{2}\, C_2H_2 + BCl_3 \xrightarrow{(H_2)} BC_x + 3\, HCl + \left(\frac{x-3}{2}\right) H_2$$

US 5498493 illustrates this approach. However, large scale manufacturing of this material is considered difficult and bulk materials are not available by this approach.

In approach b, a single precursor with the desired B:C ratio is selected and decomposed in an open or closed vessel at elevated temperature. The molecules are "tiled" to form a specific $BC_x$ material. The disadvantages of this approach are the prohibitively high costs of the organic precursor and the time required for the multi-step synthesis of the organic precursor. Further, the multi-step synthesis results in a low overall atom efficiency and low yield, and is highly susceptible to air contamination. Two examples are:

$$C_6H_4(BBr_2)_2 \rightarrow 2\, BC_3 + 4\, HBr$$

$$B(C_6H_5)_3 \rightarrow BC_{18} + \frac{15}{2}\, H_2$$

In the case of bis-dibromoborylbenzene (i.e., $C_6H_4(BBr_2)_2$), atom efficiency in the final product (based on starting with benzene) is only 9.5%. The typical yield is <40% (based on starting with dichlorobenzene).

Kouvetakis et al. (J. Chem. Soc. Chem. Commun. 1758-1759 (1986)) first disclosed a bottom-up synthesis of thin-film $BC_3$ via approach **a,** extending the compositional phase boundary of the (meta-stable) solid solution to 25 at% B in graphite (x = 3).

King et al. (J. Chem. Soc. Chem. Commun. 1758-1759 (1986) first demonstrated a bulk synthesis of $BC_3$ using a specific starting material (1,3-bis-dibromoborylbenzene). This synthesis requires long reaction times even after the above identified specific starting material has been synthesized: the recommended pyrolysis time is ~5.5 days using a 0.1 °C/min heating ramp. Further, the thus obtained material is of inferior quality, as acknowledged by the authors.

Thus, it is an object of the present invention to mitigate at least some of these drawbacks of the state of the art. In particular, the present invention addresses the need of providing a versatile method allowing the manufacturing of boron-doped graphitic carbon as a bulk-material. The present invention addresses the need of providing a method of manufacturing the desired materials based on commercially available starting materials.

These objectives are achieved by the method as defined in claim 1 and the materials as defined in claim 7. Further aspects of the invention are disclosed in the specification and independent claims, and preferred embodiments are disclosed in the specification and the dependent claims.

The present invention will be described in more detail below. It is understood that the various embodiments, preferences and ranges as provided / disclosed in this specification may be combined at will. Further, depending on the specific embodiment, selected definitions, embodiments or ranges may not apply.

Unless otherwise stated, the following **definitions** shall apply in this specification:

As used herein, the term "a", "an", "the" and similar terms used in the context of the present invention (especially in the context of the claims) are to be construed to cover both the singular and plural unless otherwise indicated herein or clearly contradicted by the context.

As used herein, the terms "including", "containing" and "comprising" are used herein in their open, non-limiting sense.

The present invention will be better understood by reference to the **figures.**

**Figure 1.** Boron-carbon phase diagram at ambient pressure; x-axis: boron content (at%), y-axis: temperature (°C). The light grey shaded region ($i_m$) indicates the meta-stable solid solution phase of graphitic $BC_x$, accessible by the inventive method. The other regions of the phase diagram denote the following phases: (L) liquid, (i) graphite, (ii) boron carbide and (iii) rhombohedral boron.

**Figure 2.** Two possible single-layer structures of $BC_3$, (x-y plane) exhibiting either (left) an ideal homogeneous distribution of boron and exclusively $BC_3$ subunits or (right) an inhomogeneous distribution of boron and first-neighbour clustered $C_2B$-$BC_2$ subunits. In some embodiments, these layers may be stacked uniformly along the z-axis to form bulk $BC_3$. In other embodiments, these layers are stacked randomly to form bulk $BC_3$ (showing turbostratic disorder). In still other embodiments, similar layers consisting of an average C:B ratio of 3 may be stacked to form bulk $BC_3$.

**Figure 3.** Powder X-ray diffraction (XRD) pattern showing the 002 and 100 reflections of bulk $BC_3$; x-axis: d-spacing (Angstrom), y-axis: intensity. The black solid line is typical of the material obtained by the inventive method (according to ex.1), and the dashed black line of material obtained by approach **b** (King et al. 2015). The more symmetrical and narrower lineshape indicate a higher degree of graphitic ordering in the inventive material.

**Figure 4.** (A) $^{11}B$ and (B) $^{13}C$ nuclear magnetic resonance (NMR) spectra of bulk $BC_3$ obtained by the inventive method (according to ex.1); x-axis: chemical shift (ppm), y-axis: intensity. The measured $^{11}B$ spectrum (black line) is fitted by acknowledging the presence of three boron chemical environments (grey lines). The $^{13}C$ spectrum indicates the presence of exclusively $sp^2$ hybridized carbon. (C) Comparison of a $B_2O_3$ standard (i) to bulk $BC_3$ obtained by approach **b** (ii, see King et al. 2015) and that obtained according to this invention (iii). Notably, the contribution from B-O bonding is not significant in $BC_3$ obtained by the inventive method.

**Figure 5.** Heavy-ion elastic recoil detection (ERD) mass spectrum of bulk $BC_3$ (black symbols) showing the presence of boron (10 and 11 amu), carbon (12 amu), and oxygen (16 amu); x-axis: mass (amu), y-axis: counts. Analysis of the spectrum (grey lines) results in a stoichiometry of x = 2.8. A commercial sample of $B_4C$ was used as the standard to determine the $^{10}B$:$^{11}B$ ratio, as well as the relative recoil cross-sections of $^{10}B$ and $^{12}C$.

**Figure 6.** Correlation between interlayer spacing (d-spacing of the 002 reflection in X-ray diffraction) of $BC_x$ and the boron content of the initial reactant mixture; x-axis: boron content (at%), y-axis d-spacing (Angstrom). The results show a plateau at x = 3 (25 at% boron). A similar correlation exists in the full-width at half-maximum (FWHM) of the 002 peak. Both the interlayer spacing and lineshape also depend on the temperature of synthesis: shown here at 800 °C (squares) and 1050 °C (crosses). Note: the maximum boron content in a final $BC_x$ product of ex.1 was

measured to be 26 ± 1 at% (x = 2.8).

**Figure 7.** Powder X-ray diffraction (XRD) patterns of bulk $BC_3$ obtained from a variety of precursors; x-axis: d-spacing (Angstrom), y-axis: intensity. All samples were synthesized at 800 °C by reacting $BBr_3$ with a variety of precursors: (i) benzene (in air), (ii) naphthalene, and (iii) hexane. The material obtained by the standard direct route via benzene and $BBr_3$ in inert conditions is also shown for comparison (iv).

**Figure 8.** Raman spectrum of bulk $BC_3$ obtained by the inventive method (according to ex.1) using an excitation wavelength of 455 nm; x-axis: Raman shift ($cm^{-1}$), y-axis: intensity. The material exhibits the distinct features of nanocrystalline (or turbostratic) graphitic carbon: the strongest band at ~1590 $cm^{-1}$ referred to as the G band (found in all graphitic carbon) and a dominant band at ~1365 $cm^{-1}$ referred to as the D band (found in defected and/or boron-doped graphite). The intensity ratio is $I_D/I_G$ = ~0.75 for bulk $BC_3$.

In more general terms, in a **first aspect,** the invention relates to a method for manufacturing boron-doped graphitic carbon of formula (I)

$$BC_x \text{ (I), wherein } 39 > x \geq 3,$$

said method comprising the steps of (a) combining a boron precursor selected from the group of boron (III) halogenides with a carbon precursor selected from the group of hydrocarbons; (b) subjecting the obtained mixture to temperatures between 600 - 1200 °C, pressure above 2 bar, for a period of time between 0.1 h and 7 days, preferably in a closed reaction environment; and (c) cooling the obtained mixture for a period of time between 0.1 h and 7 days and (d) optionally separating the obtained product of formula (I) from starting materials and by-products and / or further processing the product of formula (I). Accordingly, a one-pot synthetic approach is disclosed for the direct synthesis of $BC_x$, especially $BC_3$. The inventive method distinguishes from known methods particularly in the choice of the boron precursor (step a) and in the choice of reaction conditions (step b).

This aspect of the invention shall be explained in further detail below:

**Reaction product, $BC_x$:** The structure of the obtained reaction product "boron-doped graphitic carbon", may vary, but is known per se. The basic structure is composed of partially boron-substituted graphene layers stacked to form a bulk material. There is substantial evidence that boron is included on the graphitic lattice sites in such $BC_x$ compounds where x ≥ 3, but in samples containing larger concentrations of B, the inclusion may also be in interstitial sites or in phase-separated boron or boron carbide regions. The compounds obtained according to the inventive method are those of composition $BC_x$ where x ≥ 3. In the limiting case (x = 3), boron can be incorporated by substitution on every fourth carbon site, and a number of single-layer structures have been proposed (see Figure 2). The precise layered nature of $BC_3$ is also complicated owing to the very small difference in energy between different stacking sequences, leading to significant overall structural disorder in most $BC_x$ materials. The X-ray diffraction pattern of bulk $BC_3$ (where boron inclusion is entirely substitutional) shows broad graphitic reflections, consistent with this invention (see Figure 3). This is an acceptable property of highly desirable $BC_x$ materials, but simultaneous control of structure and composition would be ideal. The inventive method therefore provides for $BC_x$ of various structures, all of which are included by the term boron-doped graphitic carbon.

In an embodiment, the inventive method provides for $BC_x$ material in bulk form, also referred to as bulk $BC_x$. The term bulk material is known in the field and particularly denotes $BC_x$ in the form of free-standing materials (such as flakes, needles, granules, single crystals, powder or similar); these materials are typically 1 mm to 1 cm in size in at least one dimension. These bulk materials can be collected, investigated, or utilized in a device without altering their composition or structure. The bulk $BC_x$ of the inventive process, typically obtained as large metallic flakes, may be processed to powder (e.g., by grinding or milling) or smaller flakes. The bulk $BC_x$ of the inventive process is suitable for further processing steps, such as incorporation in a liquid slurry, compressing in the form of a pellet, hot-pressing in the form of a pellet or foil and others.

The term bulk $BC_x$ is chosen to distinguish from $BC_x$ materials obtained by CVD processes (approach a) which are thin-films and/or inherently bonded to a substrate when synthesized. Thin-film products are typically < 1 μm thick and strongly adhere to the surface where they are deposited. Thin film products must be deposited directly onto a device or must be separated from the substrate prior to use in a device. Due to the strong binding to the substrate, the composition and/or structure of the CVD-derived $BC_x$ material potentially degrades upon manipulation. It is considered a major advantage of the inventive method that the materials obtained by the inventive method can be further processed without altering its composition and/or its structure.

An idealized structure of bulk $BC_x$ with maximum boron content (x=3) is shown in Figure 2.

In an embodiment, the inventive method provides for $BC_x$ material where the boron-doped graphene layers of the $BC_x$ (e.g., as shown in Figure 2) are turbostratically disordered. The term turbostratic is used to describe graphitic carbon that exhibits significant stacking disorder (random or complex stacking sequence).

In an embodiment, the inventive method provides for $BC_x$ material where the boron-doped graphene layers (e.g., as shown in Figure 2) are not aligned. This includes soft BCx (where the layers can be aligned at high temperatures) and hard BCx (where the layers cannot be aligned at high temperatures).

In an embodiment, the inventive method provides for boron-doped graphitic carbon of formula (I) wherein x = 3.

In an embodiment, the inventive method provides for boron-doped graphitic carbon of formula (I) wherein x = 5.

In an embodiment, the inventive method provides for boron-doped graphitic carbon of formula (I) wherein x = 7.

In an embodiment, the inventive method provides for boron-doped graphitic carbon of formula (I) wherein x = 11.

In one embodiment, the inventive method provides for boron-doped graphitic carbon of formula (I) which contains (ie. comprises or consists of) structural elements as shown in Figure 2.

**Boron precursor:** Suitable starting materials are known per se and are commercial items, or available through known methods. Suitable boron precursors are of formula (II),

$$BX_3 \qquad \text{(II)},$$

wherein X independently represents Cl, Br or I.

$BCl_3$, $BBr_3$ and $BI_3$ are preferred, particularly $BBr_3$. Some precursors, such as $BCl_3$ require compression / cooling to achieve a liquid state, an important characteristic of the inventive method. According to the invention, mixtures of the above boron precursors may also be used.

**Carbon precursor:** A wide range of carbon precursors may be employed in the inventive method, including $sp^3$-hybridized carbon-containing molecules (such as methane, ethane, propane, hexane, etc.) $sp^2$-hybridized carbon-containing molecules (such as benzenes, ethene, propene, isoprene, pentadiene, etc.) and sp-hybridized carbon-containing molecules (such as ethyne, propyne, 1-phenylhepta-1,3,5-triyne, etc). These starting materials are collectively termed "hydrocarbons". It was found beneficial to use carbon precursors that only contain carbon and hydrogen atoms, i.e. molecules free of heteroatoms. It was found beneficial to use carbon precursors having a molecular weight between 16 and 338, corresponding to C1-C24 hydrocarbons.

In one embodiment, the carbon precursors are selected from C6-C14 aromatics, optionally substituted with one or more C1-C4 alkyl groups. Preferred aromatics include benzene, alkyl-substituted benzenes, naphthalenes and anthracenes, particular preferred aromatics include benzene, toluene, xylenes.

In one embodiment, the carbon precursors are selected from C1-C24 alkanes, including aliphatic chain or cyclic derivatives. Preferred aliphatic precursors include methane, ethane, propane, butanes, pentanes, hexanes, cyclopentane and cyclohexane; particular preferred aliphatics include cyclopentane, cyclohexane, and hexane. According to the invention, mixtures of the above carbon precursors may also be used.

**Step (a):** Providing starting materials (precursors) to a reaction is a known step and may be performed according to known principles.

This step may be performed under protective atmosphere or under ambient conditions. Protective atmosphere, such as argon or nitrogen, is preferred.

The starting materials may be provided simultaneously or sequentially. According to this invention, two or more, preferably two, starting materials are subjected to the reaction. The ratio of starting materials, the boron precursor and carbon precursor, is adjusted to reflect the desired stoichiometric ratio of the product $BC_x$. Thus, the molar ratio of boron : carbon in the starting materials is set to 1 : x.

In an advantageous embodiment, the invention relates to a process as described herein, where no further starting materials, reactions aids (catalysts) and / or diluents are added in step (a).

**Step (b):** In this step, the conversion of the starting materials to the desired product takes place. For benzene and $BBr_3$ (or $BI_3$ respectively) as starting materials, the inventive method to bulk, composition tunable $BC_x$ ($39 > x \geq 3$) proceeds as follows:

$$\frac{x}{6}\, C_6H_6 + BBr_3 \rightarrow BC_x + 3\, HBr + \left(\frac{x-3}{2}\right) H_2$$

$$\frac{x}{6}\, C_6H_6 + BI_3 \rightarrow BC_x + 3\, HI + \left(\frac{x-3}{2}\right) H_2$$

This reaction resembles the reaction via $BCl_s$ mentioned in approach **a** above. Importantly, however, this reaction takes place in a closed reaction environment (e.g., a closed vessel) at elevated temperature and pressure, and not under CVD conditions. This is readily possible due to the liquid nature of $BBr_3$ (as opposed to gaseous $BCl_3$) and is considered an important advantage of the inventive method over that of approach a. The composition of the final product can be adjusted continuously by simply varying the ratio of the precursors. This is considered an important advantage of the inventive method over that of approach b. In this step, reaction conditions are chosen to allow a reaction in the liquid, gaseous or supercritical state. If step (b) takes place in the liquid state, a liquid and a gas phase are present; the liquid phase typically contains the starting materials in co-dissolved form. If step (b) takes place in the gaseous or supercritical state, the starting materials form a single homogeneous phase. Typically, the reaction takes place in the gaseous state. Suitable reaction conditions may be determined by routine experiments and depend inter alia on the starting materials used. Suitable reaction pressures for step (b) are more than 2 and up to 150 bar, preferably 10-50 bar, such as 20 bar. Suitable reaction temperatures for step (b) are between 600-1200 °C, preferably 700-1100 °C, very preferably 800-1050 °C, such as 800 °C. The ramp rate is less critical, typically 0.1-20 °C/min, such as 1 °C/ min. Suitable reaction times for step (b) may vary, but are typically set between 0.1-200 h, preferably 0.5-24 h, preferably 2-4 h, such as 1 h.

In an embodiment, step (b) is performed discontinuously in a closed reactor.

In a further embodiment, step (b) is performed without stirring.

In a further embodiment, step (b) is performed in the liquid state.

In a further embodiment, step (b) is performed under gaseous or supercritical conditions.

**Step (c):** Terminating a reaction is a known step and may be performed according to known principles. It was found that simply cooling the reaction mixture of step (b) allows for terminating the reaction. Cooling time and ramp rate are less critical. Suitable cooling times are between 0.1-24 h, preferably 1-4 h. Suitable ramp rates are therefore in the range of 0.1-200 °C/min, such as 5 °C/min.

**Step (d):** Product isolation, purification and work-up are standard steps and may be performed according to known principles. As the product is not particularly sensitive and the starting materials are quantitatively consumed, no specific effort must be made to separate the solid $BC_x$ product from the gaseous products. Some precautionary measures may have to be taken in venting and/or storing the gaseous products (e.g., $H_2$ and HBr) due to their flammable and/or corrosive nature. Accordingly, the reaction product may be removed from the reactor to obtain bulk material of boron-doped graphitic carbon.

The obtained material may be washed, e.g. by filtration or centrifugation.

The obtained material may be subjected to further steps, such as pressing or milling to obtain the bulk material in the desired form.

The overall graphitic structure of the inventive material has been confirmed by X-ray diffraction (Figure 1) and Raman spectroscopy (Figure 8). The presence and nature of boron inclusion has been determined by solid-state nuclear magnetic resonance spectroscopy (Figure 4) and heavy-ion elastic recoil detection analysis (Figure 5). No significant presence of B-B bonding, especially in icosahedral subunits of boron impurities or phase separated boron-rich phases, could be observed by any technique. Accordingly, the invention provides for material as described herein, wherein icosahedral B-B bonds account for less than 1%, typically 0% (below detection limits). The structural order of the final product is improved at higher temperatures and with higher content of boron (see Figure 6).

For the inventive method, comprising steps (a) to (c) and optionally (d), numerous advantages over the known methods were identified. These advantages include, depending on the chosen precursors and reaction conditions, the following aspects:

i. *Simplicity.* The synthesis is achieved in a "single pot", from two reagents. The reagents may be completely miscible in liquid form under standard conditions. The precursors can be mixed under ambient conditions (i.e., in air), compromising some product purity, or preferably under inert atmosphere.

ii. *Speed.* The reaction proceeds by a single step: heating of the closed vessel to the desired reaction temperature and then cooling back to ambient temperature. This can be completed in very short time or over longer times depending on the desired product. Known approaches to bulk $BC_x$ via approach **b** are a factor of 20-100× slower.

iii. *Cost.* The synthetic route described herein only requires commercially available starting materials composed of abundant elements, without the need for a catalyst. The yield of this reaction is quantitative. Atom efficiency is 16% (for $BBr_3$); the high mass of Br is the only reason for such a low atom efficiency. The sole secondary product of the reaction to form $BC_3$ is pure hydrogen bromide (HBr), which is also a valuable chemical commodity. Boron tribromide is cheap and easy to handle compared to diborane and higher boranes.

When considering that approach **a** is not a bulk synthesis route, the method disclosed herein is cheaper than any known route to bulk $BC_x$ (especially $BC_3$) by a factor of at least 100; approach **b** requires large amounts of solvent and other chemicals, consumes time and energy in the various purification steps, and leads to typical overall yields of <40%. When considering approach **a** as comparable to the approach disclosed herein, a significant improvement

in cost is still maintained owing to no loss of precursors and much simpler apparatus.

iv. *Control.* The method described herein shows a significant improvement over CVD methods where it is not possible to simultaneously control the structure and composition of $BC_x$. To induce higher crystallinity of the product, a higher temperature may be used; this typically causes undesirable selective decomposition of the CVD precursors in approach **a,** leading to a loss of control of the product composition. In a single-step, closed vessel approach as described herein, the composition is fixed by the reactant ratio, and the structure is determined by the temperature and pressure conditions/rates.

In a **second aspect,** the invention relates to new materials, particularly materials available upon application of the methods described herein. These materials have improved performance over graphite and hard carbon in applications such as hydrogen storage.

This aspect of the invention shall be explained in further detail below:

The structure and composition of bulk $BC_3$ obtained by the direct route as disclosed herein is superior to that obtained by approach **b** (King et al. 2015) in at least three quantitative ways:

i. The underlying graphitic structure is more homogeneous (less turbostratically disordered), as determined by powder X-ray diffraction (XRD) wherein the 002 reflection typically exhibits a full-width at half-maximum (FWHM) of 0.56 Å in d-spacing (corresponding to a FWHM of 4° in 2$\theta$ when measured using Cu K$\alpha$ radiation). See Figure 3. This is further confirmed by Raman spectroscopy, showing a lower $I_D/I_G$ ratio, which (for a fixed composition) is proportional to the content of defects. See Figure 8.

ii. The boron chemical environment is more homogeneous (containing predominantly bonds to carbon) indicating better chemical purity, as determined by $^{11}B$ nuclear magnetic resonance (NMR) spectroscopy wherein the contribution at 13 ppm from boron oxide as in $B_2O_3$ is undetectable. See Figure 4.

iii. The formation of carbon-rich impurities in the form of microspheres (observed by electron microscopy) is suppressed to little or none, even at a relatively fast heating rate of 1 °C/min, requiring much shorter heating times than those employed in approach **b.**

In one embodiment, the present invention provides for a boron-doped graphitic carbon of formula (I), characterized by a 002 XRD reflection with a FWHM that is < 1 Å in d-spacing, and typically 0.5-0.6 Å. Materials obtained by approach b show a FWHM of ~1 Å. See Figure 3.

In one embodiment, the present invention provides for a boron-doped graphitic carbon of formula (I), characterized by a $^{11}B$ NMR spectrum with a primary peak of highest intensity at a chemical shift of 28-29 ppm (with reference to $BF_3$). Importantly, no significant B-O content (e.g., at ~13 ppm) or icosahedral B-B content (at ~0 ppm) is detectable. Such significant bonding content is detectable by a sharp, prominent feature at the specific chemical shift indicated, above the broad main feature corresponding to B-C bonding.

In one embodiment, the present invention provides for a boron-doped graphitic carbon of formula (I), which is present as-synthesized in the form of a bulk material. The term bulk material is discussed above and particularly denotes a product with dimensions of 1 -10 mm in at least one direction. These materials are typically obtained as flakes, needles or powder.

In one embodiment, the present invention provides for a boron-doped graphitic carbon of formula (I), characterized as containing less than 1% of boron-rich impurities such as elemental boron or boron carbide, as determined by a lack of evidence for icosahedral B-B bonds in $^{11}B$ NMR or Raman spectra. Icosahedral B-B bonding can be detected by intensity at a chemical shift of ~0 ppm (with reference to $BF_3$) in $^{11}B$ NMR spectra, and by distinct vibrational bands at a Raman shift between 0-1000 $cm^{-1}$ in Raman spectra..

In one embodiment, the present invention provides for a device selected from hydrogen storage devices, comprising boron-doped graphitic carbon as defined herein as the active solid-state storage material.

In one preferred embodiment, the present invention provides for the use of boron-doped graphitic carbon, $BC_x$, as defined herein, as an electrode material. This use particularly relates to electrodes in batteries, such as lithium-ion, sodium-ion or potassium-ion batteries. Accordingly, the invention provides for electrodes, comprising or consisting of, boron-doped graphitic carbon, $BC_x$, as defined herein.

In one particularly preferred embodiment, the present invention provides for the use of boron-doped graphitic carbon, $BC_x$, as defined herein, as an anode material in lithium-ion batteries.

In one particularly preferred embodiment, the present invention provides for the use of boron-doped graphitic carbon, $BC_x$, as defined herein, as an anode material in sodium-ion batteries.

In one particularly preferred embodiment, the present invention provides for the use of bulk $BC_3$, as defined herein, as an anode material in lithium-ion batteries.

In one particularly preferred embodiment, the present invention provides for the use of bulk $BC_3$, as defined herein, as

an anode material in sodium-ion batteries.

The direct, one-step, single-pot synthetic route to bulk $BC_x$ from standard laboratory reagents described in this work significantly reduces the cost for devices adapted to the above applications. The invention therefore also relates to boron-doped graphitic carbon of formula (I) obtainable by, or obtained by, the method described herein (first aspect).

In a **third aspect,** the invention relates to the use of the new materials as described herein.

This aspect of the invention shall be explained in further detail below:

There are numerous advantages of $BC_x$ materials over graphite and hard carbon, which have been (in some cases) previously investigated in terms of the following applications:

i. hydrogen storage material
ii. catalyst and/or catalyst support material
iii. battery electrode material
iv. detector and/or shielding material for neutrons
v. thermoelectric material

The invention also relates to the use of the boron-doped graphitic carbon, as defined herein (particularly in the $2^{nd}$ aspect of the invention) in these applications.

In one preferred embodiment, the present invention provides for the use of boron-doped graphitic carbon, $BC_x$, as defined herein, as a hydrogen storage material.

In one preferred embodiment, the present invention provides for the use of bulk $BC_3$, as defined herein, as a hydrogen storage material.

In one preferred embodiment, the present invention provides for the use of boron-doped graphitic carbon, $BC_x$, as defined herein, as an electrode material in batteries.

In one preferred embodiment, the present invention provides for the use of bulk $BC_3$, as defined herein, as an electrode material in batteries.

In one embodiment, the present invention provides for the use of a boron (III) halogenide for manufacturing a compound of formula (I) as defined herein in the liquid phase, supercritical phase, or high-pressure gaseous phase. The term "high-pressure" is known in the field and is unique to each gas and includes particularly the range of >2 bar and below the critical point, preferably 5 - 50 bar. These ranges are particularly suited for mixtures of benzene and $BBr_3$.

In one embodiment, the present invention provides for the use of hydrocarbons as defined herein (particularly $C_6$-$C_{14}$ aromatics, optionally substituted with one or more $C_1$-$C_4$ alkyl groups) for manufacturing boron-doped graphitic carbon of formula (I) in the liquid phase, supercritical phase, or high-pressure gaseous phase.

To further illustrate the invention, the following **examples** are provided. These examples are provided with no intend to limit the scope of the invention.

**example 1: Direct Synthesis of $BC_3$**

A liquid solution of benzene (124 μL, anhydrous, 99.8%, Alfa Aesar) and boron tribromide (265 μL, 99.9%, Acros Organics) was charged into a quartz tube (inner diameter 1.6 cm, length 20 cm) sealed at one end and prepared with a preformed neck. In optimal conditions, this should be performed under inert Ar atmosphere (<0.1 ppm $O_2$/$H_2O$) but can also be performed in air. The open end of the tube was closed with a Swagelok adapter (via O-ring compression fitting). The tube was connected to a Schlenk line via Swagelok fitting, cooled, and then evacuated to ~$10^{-2}$ mbar. The tube was flame sealed at the preformed neck under static vacuum.

The sealed quartz reactor was placed in a closed horizontal tube furnace (25 cm temperature homogeneity length, Gero Gmbh). The furnace was heated to pyrolysis temperature (typically 800 °C) via a linear ramp (typically 1°C/min), held for a specified time (typically 1 h), and then cooled to ambient at no specific rate. The tube was opened by cutting open the quartz tube at one end. The sample was immersed in water, collected on a vacuum filter frit (coarse porosity), washed with ~30 mL acetone, and finally washed with copious water and dried in air.

**example 2: Direct Synthesis of $BC_x$**

The procedure of ex. 1 can be used to obtain $BC_x$ materials with different compositions ($x \geq 3$). The liquid solution initially charged into the quartz tube should contain the molar ratio of the desired final product. If a lower C/B molar ratio is used (e.g., C/B = 1), the final product will retain a composition of x = 3 and excess precursor remains unreacted. Examples are given in the table below:

| Using $BBr_3$ (265 µL) : | |
|---|---|
| $BC_x$ | Carbon Precursors |
| $BC_{11}$ | Benzene (457 µL) |
| $BC_7$ | Benzene (287 µL) |
| $BC_5$ | Benzene (205 µL) |
| $BC_3$ | Benzene (124 µL) |

The compositions were confirmed by elastic recoil detection analysis; yield was confirmed as quantitative.

This example clearly shows that a wide range of x for $BC_x$ is accessible by the inventive method.

**example 3: Direct Synthesis using different carbon precursors:**

The procedures of ex. 1 and 2 can be used with different carbon precursors. Examples are given in the table below. The X-ray diffraction patterns of some of the products are shown in Fig. 7:

| To obtain $BC_3$: | |
|---|---|
| Boron Precursor | Carbon Precursors |
| $BBr_3$ (265 µL) | Anhydrous Benzene (124 µL) |
| | Benzene (124 µL) in air |
| | Naphthalene (108 mg) |
| | Hexane (185 µL) |

The structures were confirmed by X-ray diffraction; the yield was confirmed as quantitative.

This example clearly shows that the inventive method is applicable for a wide range of hydrocarbons.

**example 4: Direct Synthesis using different boron precursors:**

The procedure of ex. 1 can be used with different boron precursors. Examples are given in the table below:

| To obtain $BC_3$: | |
|---|---|
| Carbon Precursor | Carbon Precursors |
| Anhydrous Benzene (124 µL) | $BBr_3$ (265 µL) |
| | $BBr_3$ in air (265 µL) |
| | Cooled, liquid $BCl_3$ (243 µL) |
| | $BI_3$ (612 mg) |

The structures were confirmed by X-ray diffraction; the yield was confirmed as quantitative.

This example clearly shows that the inventive method is applicable for a wide range of boron (III) halogenides.

## Claims

**1.** A method of manufacturing boron-doped graphitic carbon of formula (I),
$BC_x$ (I), wherein $39 > x \geq 3$,
**characterized in that** the method comprises the steps of

(a) combining a boron precursor selected from the group of boron (III) halogenides with a carbon precursor selected from the group of C1-C24 hydrocarbons and where the molar ratio of boron to carbon is 1 : x;

(b) subjecting the obtained mixture to temperatures between 600 - 1200 °C, pressures above 2 bar, for a period of time between 0.1 h and 7 days, preferably in a closed reaction environment; and
(c) cooling the obtained mixture for a period of time between 0.1 h and 7 days; and
(d) optionally separating the obtained product of formula (I) from starting materials and by-products and / or further processing the product of formula (I).

**2.** The method of claim 1, wherein

- the graphene layers of the boron doped graphitic carbon of formula (I) are turbostratically disordered; and/or
- x represents 3; and/or
- the boron doped graphitic carbon of formula (I) is a bulk material; and or
- the graphene layers of the boron doped graphitic carbon of formula (I) comprises structural elements (I-1) and / or (1-2)

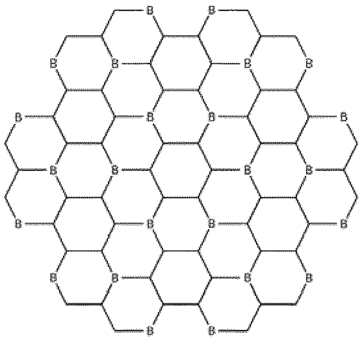
(I-1),
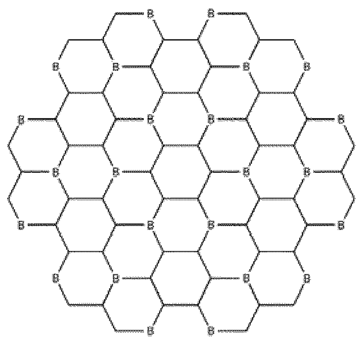
(I-2).

**3.** The method of claim 1, wherein the boron precursor is of formula (II),
$BX_3$ (II),
wherein X independently represents Cl, Br or I.

**4.** The method of claim 1, wherein the carbon precursor is selected from the group of benzenes, alkylbenzenes, naphthalenes and anthracenes.

**5.** The method of claim 1, wherein in step (a)

- all starting materials are liquid at ambient conditions; and/or
- no solvent is added; and/or
- no catalyst is added.

**6.** The method of claim 1, where in step (b)

- temperature is between 700-1100 °C; and/or
- pressure is above 20 bar; and/or
- reaction time (b) is between 1-24 h; and/or
- reaction takes place in a closed environment; and/or
- reaction takes place discontinuously without stirring; and/or
- reaction takes place under high-pressure gaseous conditions.

**7.** A boron-doped graphitic carbon of formula (I),
$BC_x$ (I), wherein $39 > x \geq 3$,
**characterized by** an X-ray diffraction pattern exhibiting a 002 reflection with a FWHM of < 1 Å in d-spacing, and typically 0.5-0.6 Å.

**8.** A boron-doped graphitic carbon of formula (I),
$BC_x$ (I), wherein $39 > x \geq 3$,
**characterized by** a $^{11}B$ NMR spectrum with a primary peak of highest intensity at a chemical shift (with reference to $BF_3$) of 28-29 ppm and no, or essentially no, intensity centered at 13 ppm and / or centred at 0 ppm.

**9.** The boron-doped graphitic carbon according to claim 7 or 8, **characterized in that**

- it is obtained according to any of claims 1 - 6; and / or
- it is present in the form of bulk material; and / or
- the boron-doped graphene layers of BCx are not aligned.

**10.** A device, comprising boron-doped graphitic carbon as defined in claims 7 - 9, said device being selected from

- hydrogen storage devices, particularly where the active solid-state storage material comprises or consists of said boron-doped graphitic carbon;
- batteries, particularly where an electrode comprises or consists of said boron-doped graphitic carbon.

**11.** The use of boron-doped graphitic carbon, as defined in claims 7 - 10, as a hydrogen storage material or as an electrode material.

**12.** The use of

- a boron (III) halogenide, and / or
- C6-C14 aromatics, optionally substituted with one or more C1-C4 alkyl groups,

for manufacturing a compound of formula (I) according to any of claims 1 - 7 in the gas phase, in the liquid phase or supercritical phase, preferably in the high-pressure gaseous phase.

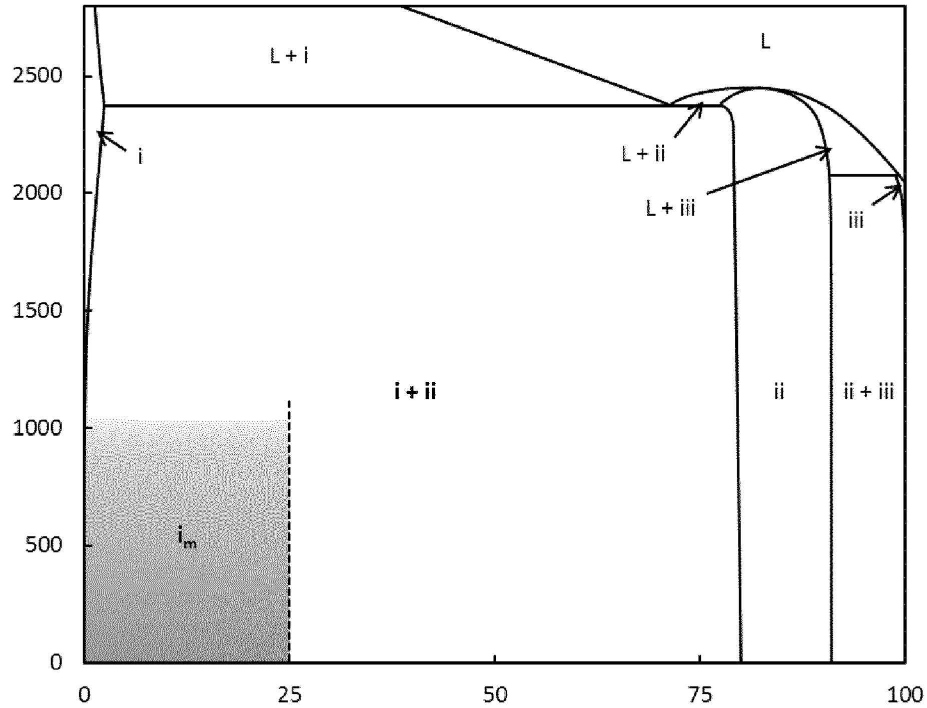
L + i
L
i
L + ii
L + iii
iii
i + ii
ii
ii + iii
$i_m$
2500
2000
1500
1000
500
0
0
25
50
75
100

Fig. 1

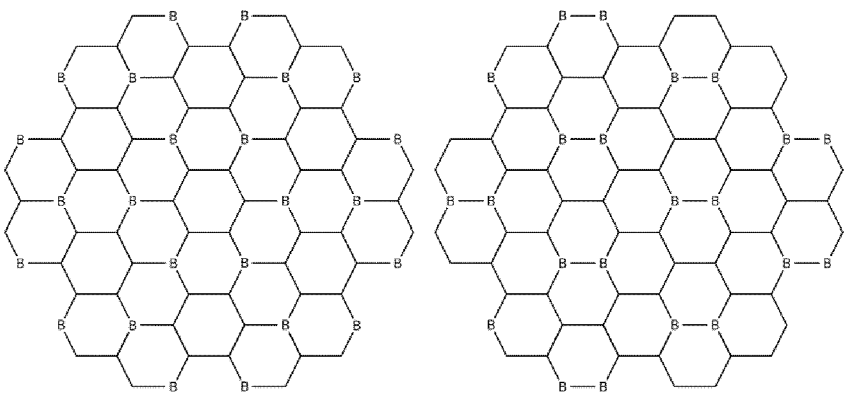

Fig. 2

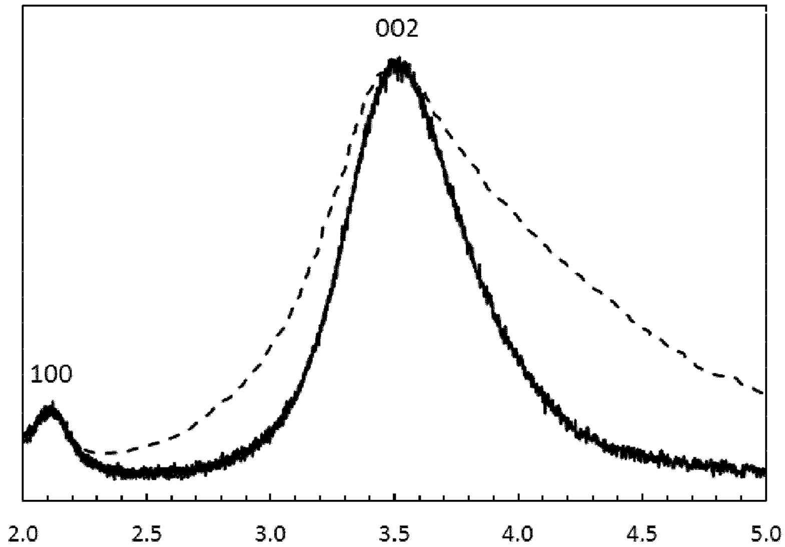
002
100
2.0
2.5
3.0
3.5
4.0
4.5
5.0

Fig. 3

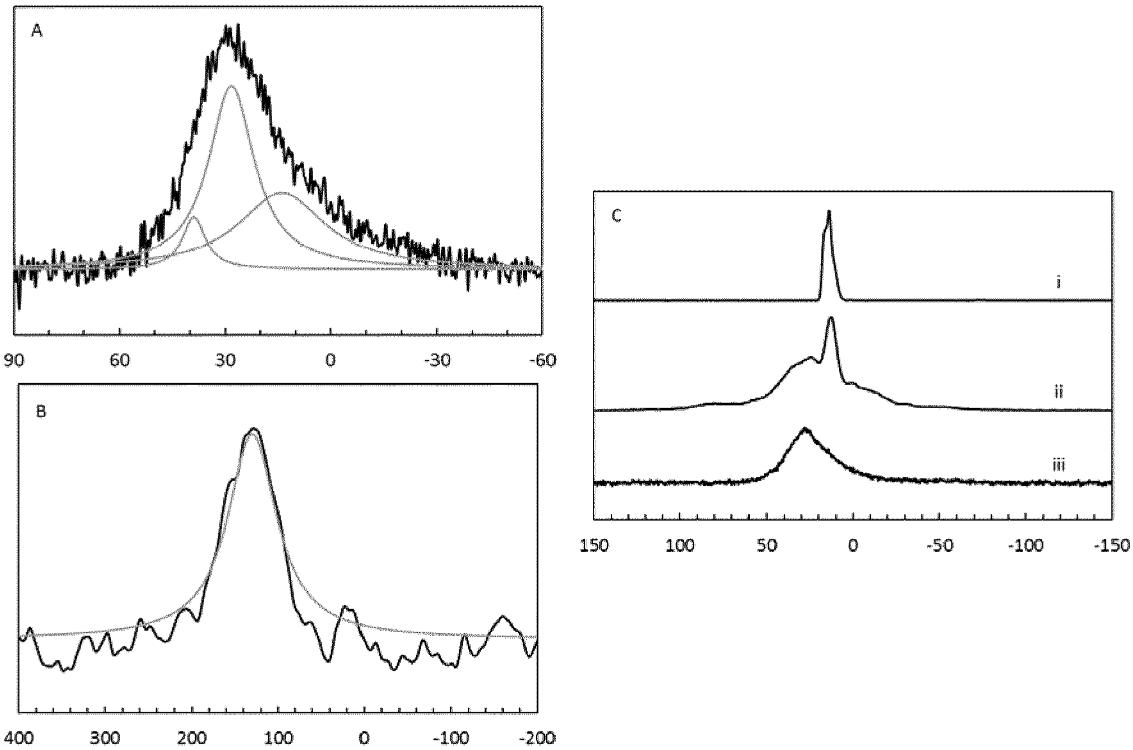
A
90
60
30
0
-30
-60
B
400
300
200
100
0
-100
-200
C
i
ii
iii
150
100
50
0
-50
-100
-150

Fig. 4

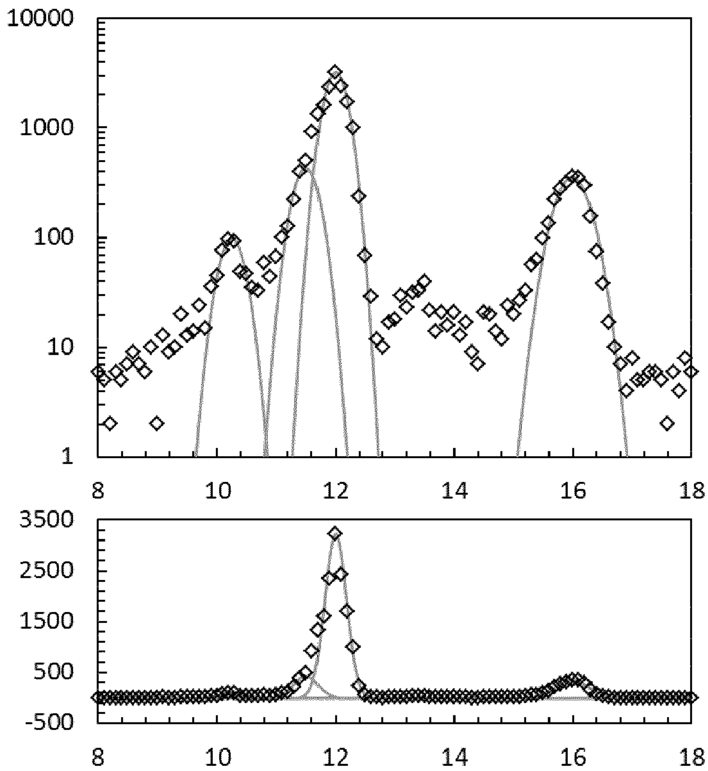
10000
1000
100
10
1
8
10
12
14
16
18
3500
2500
1500
500
-500
8
10
12
14
16
18

Fig. 5

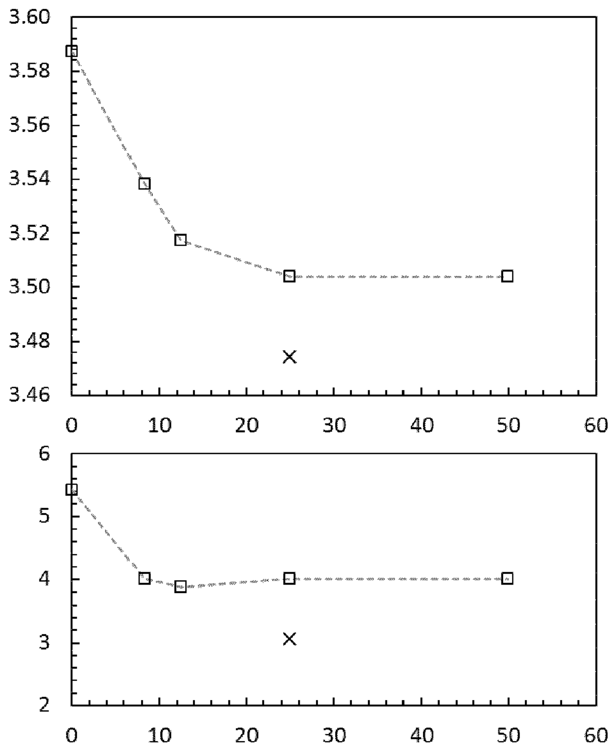
3.60
3.58
3.56
3.54
3.52
3.50
3.48
3.46
0
10
20
30
40
50
60
6
5
4
3
2
0
10
20
30
40
50
60

Fig. 6

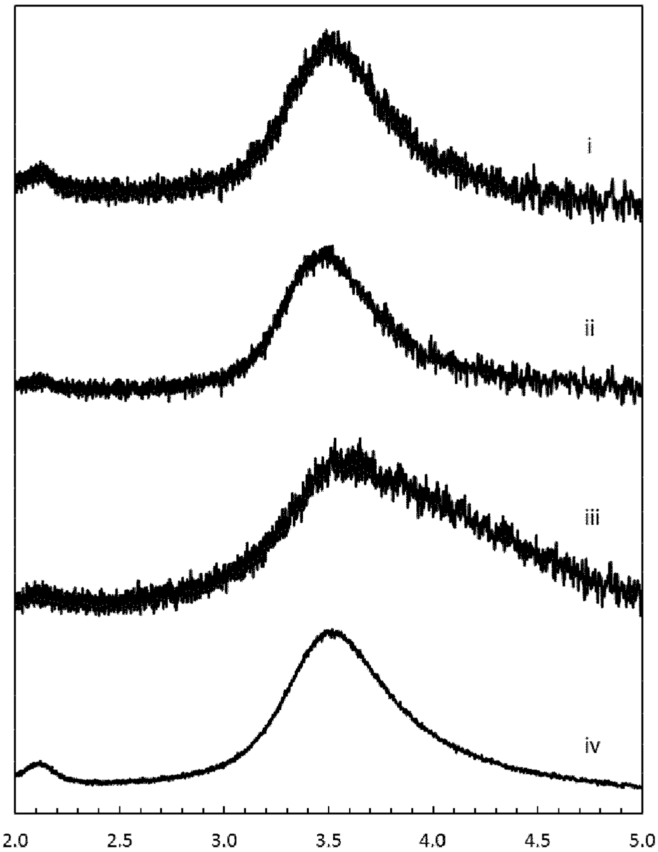


Fig. 7

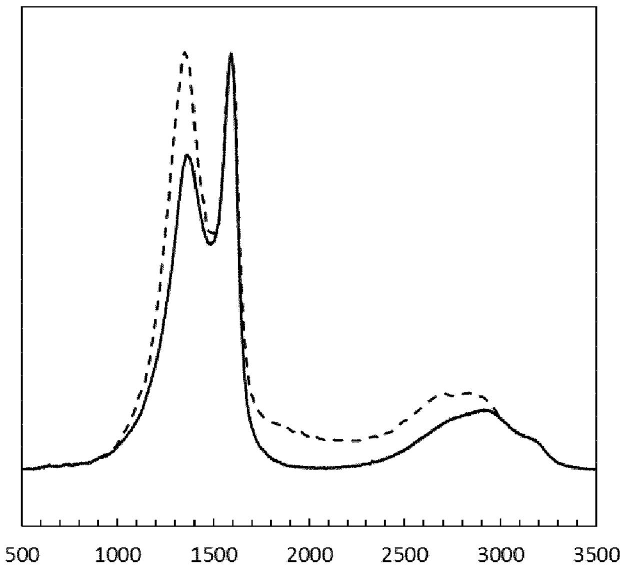


Fig. 8

Europäisches Patentamt
European Patent Office
Office européen des brevets

# EUROPEAN SEARCH REPORT

Application Number
EP 16 19 0855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 0 629 012 A2 (MOLI ENERGY 1990 LTD [CA]) 14 December 1994 (1994-12-14)<br>* claim 1; table 1 *<br>----- | 7-11 | INV.<br>C01B31 |
| X | EP 2 998 271 A1 (SHOWA DENKO KK [JP]) 23 March 2016 (2016-03-23)<br>* examples 1-6; table 1 *<br>----- | 7-9 | |
| X | US 2015/213915 A1 (BAEK JONG-BEOM [KR] ET AL) 30 July 2015 (2015-07-30)<br>* claim 16; example 1 *<br>----- | 1-6,12 | |

TECHNICAL FIELDS SEARCHED (IPC)

C01B

The present search report has been drawn up for all claims

1

| Place of search | Date of completion of the search | Examiner |
|---|---|---|
| The Hague | 30 January 2017 | Mattheis, Chris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 16 19 0855

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2017

| Patent document cited in search report | Publication date | Patent family member(s) | Publication date |
|---|---|---|---|
| EP 0629012 A2 | 14-12-1994 | CA 2098248 A1 | 12-12-1994 |
| | | EP 0629012 A2 | 14-12-1994 |
| | | JP H0773898 A | 17-03-1995 |
| | | US 5498493 A | 12-03-1996 |
| EP 2998271 A1 | 23-03-2016 | CN 105209385 A | 30-12-2015 |
| | | EP 2998271 A1 | 23-03-2016 |
| | | JP 5680261 B1 | 04-03-2015 |
| | | US 2016096964 A1 | 07-04-2016 |
| | | WO 2014185496 A1 | 20-11-2014 |
| US 2015213915 A1 | 30-07-2015 | KR 20150089275 A | 05-08-2015 |
| | | US 2015213915 A1 | 30-07-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5498493 A


### Non-patent literature cited in the description


- **KOUVETAKIS et al.** *J. Chem. Soc. Chem. Commun.,* 1986, 1758-1759
- **KING et al.** *J. Chem. Soc. Chem. Commun.,* 1986, 1758-1759